# EUROPEAN PATENT APPLICATION

(11) **EP 2 899 628 A1**
(43) Date of publication of application: **29.07.2015**
(21) Application number: 12884876.9
(22) Date of filing: 24.09.2012
(51) Int. Cl.: G06F 3/14

(54) **SYSTEM AND METHOD FOR INTERFACE CONTENT TRANSFER AND DISPLAY, AND TERMINAL**

(71) Applicant: Dongguan Yulong Telecommunication Tech Co. Ltd., Guangdong 523808 (CN); Yulong Computer Telecommunication Scientific (Shenzhen) Co. Ltd., Shenzhen, Guangdong 518057 (CN)
(72) Inventor: XIONG, He, Shenzhen Guangdong 518057 (CN); LI, Dejian, Shenzhen Guangdong 518057 (CN)
(74) Representative: Detken, Andreas
(86) International application number: PCT/CN2012/081840
(87) International publication number: WO 2014/043918

(57) **Abstract**

Provided is a system for interface content transfer and display, comprising: a connection establishment unit for establishing a wireless connection between two terminals which require interface content transfer to be performed; an identification unit for determining the corresponding initial terminal and target terminal in the two terminals; a content acquisition unit for acquiring a display content on a screen interface of the initial terminal; and a transfer and display unit for transferring and displaying the display content on a screen interface of the target terminal. Also proposed are a method for interface content transfer and display and a terminal. The technical solution of the present invention can realize terminal interconnection automatically, and transfer and display a display content of a terminal on another terminal, thereby realizing content transfer and sharing.

## Description

### TECHNICAL FIELD

The present disclosure relates to the technical field of display control of a terminal, and in particular to a system for display transferring of interface content, a method for display transferring of interface content, and a terminal.

### BACKGROUND

In related technology, if a user desires to transfer an application that is logged in to on a terminal, such as QQ, Fetion, microblog or renren on a mobile phone, to another terminal, the user needs to run the application again on the another terminal (such as a mobile phone or a laptop) and enter an account or a password to log in to the application. If an opened document on the terminal, such as a Word file, a pdf file or a txt file, needs to be transferred to another terminal for reading, the whole file is transferred to the new terminal manually by means of Bluetooth, a USB interface or a network, and then the file is re-opened and re-scrolled manually to the viewed part. If the user wants to share a webpage being viewed with another terminal, the user notifies the other party of the specific webpage link, and the link is re-entered and the webpage is opened and scrolled to the viewed part. As can be seen, the above processes are cumbersome and not easily to be implemented.

Therefore, there is a need for a new technology of display transferring of interface content, with which the terminals may be automatically connected with each other and display transferring of the displayed content from one terminal to other terminals is performed, to achieve content transferring and sharing.

### SUMMARY

In view of the above problem, a new technology of display transferring of interface content is provided according to the disclosure, with which the terminals may be automatically connected with each other and display transferring of the displayed content from one terminal to other terminals is performed, to achieve content transferring and sharing.

A system for display transferring of interface content is provided according to the disclosure, which includes: a connection establishment unit, configured to establish a wireless connection between two terminals on which the interface content is to be transferred; an identification unit, configured to determine an original terminal and a target terminal from the two terminals; a content acquisition unit, configured to acquire a displayed content on a screen interface of the original terminal; and a display transferring unit, configured to transfer the displayed content to a screen interface of the target terminal.

In the technical solution, for the process of display transferring of the displayed content on the screen interface, for example, a user originally views a Word document on a terminal A whose power may be exhausted or which may be not portable and needs to view the Word document on a terminal B which is fully charged or more portable, in this case, a wireless connection is established between the terminal A and the terminal B and then the Word document displayed originally on the screen interface of the terminal A is displayed on the screen interface of the terminal B, without manual connection and transmission by the user or opening the document or running an application manually by the user. Obviously, besides various documents and files such as a Word document, display transferring of a webpage, music, a video and an application can also be achieved in the above way. The wireless connection herein may be implemented in various connection manners such as an infrared connection, a Bluetooth connection, a wireless local area network and a near field communication technology.

In the above technical solution, preferably, the connection establishment unit includes a distance detection sub-unit configured to detect whether there is a nearby object within a predetermined distance range of each of the two terminals. The connection establishment unit enables a wireless connection function and connects to the searched terminal if there is a nearby object within the predetermined distance range of the terminal.

In the technical solution, the display transferring process may be triggered by making the two terminals against each other. Specifically, a proximity sensor may be used to detect surroundings of the terminal or the direction of the probe of the proximity sensor. A nearby object within the predetermined distance range may indicate that the user is placing another terminal to be against the terminal, and if the terminal has a display transferring function, the terminal automatically enables the wireless connection function and connects to the searched terminal for implementation of the display transferring.

In any one of the above technical solutions, preferably, the connection establishment unit further includes: a pressure detection sub-unit configured to, in a case that the two terminals are placed against each other, acquire a pressure value sensed by each of the two terminals and send the acquired pressure value to the searched terminal; a pressure reception sub-unit configured to receive the pressure value from the searched terminal; and a pressure comparison sub-unit configured to compare a difference between the pressure value sensed by each of the two terminals and the received pressure value with a preset difference, the connection establishment unit respectively connects the two terminals to the terminals corresponding to the received pressure values in a case that the difference is less than or equal to the preset difference, or otherwise the two terminals are not respectively connected to the terminals corresponding to the received pressure values.

In the technical solution, the pressures suffered by the two terminals placed against each other should be equal due to action-reaction of force. Therefore, in order to prevent the terminal from being misconnected to other terminal, it may be judged whether the searched terminal is a correct terminal by detecting and comparing the pressure value. In particle, certain error range may be allowed because of detection error of the pressure value, thereby increasing the probability of successful connection.

In any one of the above technical solutions, preferably, the connection establishment unit further includes: an angle detection sub-unit configured to acquire an angle between each of the two terminals and a preset reference plane and send the acquired angle to the searched terminal; an angle reception sub-unit, configured to receive the angle from the searched terminal; and an angle judgment sub-unit, configured to judge whether the sum of the angle of the terminal itself and the received angle is equal to a preset angle, the connection establishment unit connects respectively the two terminals to the terminals corresponding to the received angles in a case that the sum is equal to the preset angle, or otherwise the two terminals are not respectively connected to the terminals corresponding to the received angles.

In the technical solution, in order to further avoid misconnection, the angle between the terminal and the preset reference plane may be detected, such as an angle between the terminal and a horizontal plane. A rule may be preset, for example, it may be ruled that the screens of the two terminals are placed against each other and towards each other (for example, promoting information may be displayed on the screen of the terminal in a form including words, a schematic picture, an animation or a video), then the sum of angles for the two terminals should be 180 degrees, and the two terminals are not allowed to be connected if the sum of angles is not 180 degrees. In addition, the user may set a habitual placement mode, for example, the back of one terminal is against the screen of another terminal, or the back of one terminal is against the back of another terminal. The detected angle may be also changed, for example, an angle between the screen of the terminal and the horizontal plane may be selected or an angle between the back of the terminal and the horizontal plane may be selected, which may cause the sum of the angles to be different. However, for a condition which is already set, the sum of the corresponding angles is definite, which may be used to judge whether the terminal is a terminal required to be connected.

In any one of the above technical solutions, preferably, the identification unit includes an angle comparison sub-unit configured to compare the angle of the terminal itself with the received angle in a case that the sum of the angle of the terminal itself and the received angle is equal to the preset angle, and determine the terminal as the original terminal or the target terminal based on the comparison result.

In the technical solution, after the terminals on which the display transferring is to be performed are determined, the original terminal and the target terminal needs to be determined. The original terminal is a terminal used initially by the user, and the displayed content on the screen interface of the original terminal needs to be transferred to the screen interface of the target terminal. Different determination solutions may be set according to users' habits. For example, in a case that the screens of the two terminals are placed against each other and towards each other, the terminal is placed in a positive direction (the handset is at the upper and the microphone is at the lower) with the direction from the microphone to the handset being the positive direction, and the angle between the back of the terminal and the horizontal plane is the detected angle with the horizontal plane being the reference plane, the terminal with a larger angle may be selected to be the original terminal and the terminal with a smaller angle may be selected to be the target terminal. In other cases, considering various factors such as the placement way of the terminals, the calculation way of the angles and the reference plane, the result of the original terminal and the target terminal determined from the angles may be different. However, for a case which is already set, similarly to the example in the particular case mentioned above, the result is definite and can be used to distinguish the original terminal and the target terminal.

In any one of the above technical solutions, preferably, the identification unit further includes: a velocity acquisition sub-unit configured to acquire a movement velocity of each of the two terminals in the process of placing the two terminals to be against each other; and a velocity comparison sub-unit configured to compare the movement velocities of the two terminals, where the terminal with a higher movement velocity is determined as the original terminal and the terminal with a lower movement velocity is determined as the target terminal.

In the technical solution, in some extreme cases, for example, the two terminals are placed vertically, it is difficult to judge whether the terminal is the original terminal or the target terminal by means of angle. Considering users' psychology, usually one terminal is moved and another terminal is not moved in placing one terminal to be against another terminal. The final result is similar to "placing" the displayed content on the original terminal to the target terminal, and for this action, the terminal with a higher movement velocity may be set as the original terminal and the terminal with a lower movement velocity may be set as the target terminal. An opposite way or other ways may also be used according to users' habits.

In any one of the above technical solutions, preferably, the system further includes a switch unit configured to enable a function about the display transferring of the interface content of the two terminals in response to a received enabling command.

In the technical solution, a switch is provided, and thus it is avoided that if there is any object approaching the terminal, the wireless connection function is enabled automatically to perform operations such as search and connection in a case that the relative function is not enabled, which may result in a misoperation of the terminal and consume the power of the terminal. The enabling command herein may be generated via a virtual function key on the terminal, or the corresponding function may be enabled by setting a physical key and pressing the physical key.

In any one of the above technical solutions, preferably, the displayed content includes the content displayed on the current screen interface of the original terminal and/or the content running in the background of the original terminal.

In the technical solution, the displayed content may include a document (for example, a Word document, a txt document), a file (for example, a mp3 file, a video file), a webpage, a running application (for example, QQ, Fetion) displayed on the current screen interface of the original terminal, and may also include the above various contents running in the background and not displayed on the current screen interface. Information of the displayed content may be acquired by viewing the task manager or the like. In practice, the user may customize the content on which the display transferring is allowed to be performed according to actual condition.

In any one of the above technical solutions, preferably, the displayed content includes at least one or a combination of: an opened document, a running file, an opened webpage and a running application; and the content acquisition unit is configured to send the document, the file, a web address of the webpage and/or information of the application in the original terminal to the target terminal; and the display transferring unit is configured to open the received document, file and/or web address on the target terminal or running a corresponding application corresponding to the received information of the application on the target terminal.

In the technical solution, the document or the file which usually has a small size may be transferred and opened directly. The file with a large size such as a video may be restricted to be transferred by setting a file size allowed to be transferred. A matched application may be found in the target terminal based on information such as the name of the application and the development corporation of the application, and then the matched application is run. In a case that there is no matched application in the target terminal, it may prompt the user to download the application or the application is automatically downloaded and then run.

In any one of the above technical solutions, preferably, the system further includes a detection unit configured to judge whether a matched application matched with the received information of the application from the original terminal exists in the target terminal, the matched application is run in a case that the matched application exists in the target terminal, or otherwise display transferring of the application is not performed.

In the technical solution, the information of the application includes, for example, a name, a version number and a name of a developer of the application. The user may set any one or more of the name, the version number, the name of the developer of the application as the matching item, and the matching item is matched in the target terminal to determine whether there is a matched application in the target terminal. For example, only the name of the application is set for match, and if there is an application having the same name, the application is run. However, the name of the application may be modified freely, and a mistaken judgment may occur. Particularly, some malicious program may be disguised as the application having the same name, which may cause the target terminal to be damaged and the user information to be exposed. Therefore, information of the application is matched to increase the accuracy and enhance the security.

In any one of the above technical solutions, preferably, the content acquisition unit further includes a progress acquisition sub-unit configured to acquire progress information of the displayed content from the original terminal and send the acquired progress information to the target terminal, and the display transferring unit further includes a progress adjustment sub-unit configured to adjust the opened document, file, webpage and/or application in the target terminal based on the received progress information.

In the technical solution, the document originally viewed by the user, the file originally run by the user, the webpage originally browsed by the user and the application originally run by the user may not be in the start page but already browsed or reached to a specific interface, such as the current displayed page number of the document, the browsed location of the webpage, the played time point of the music and the interface of the application. The progress information may be recorded and the same record is reverted to on the target terminal, thereby avoiding the operation such as scrolling or clicking performed manually by the user.

In any one of the above technical solutions, preferably, in a case that login information is required by the application, the content acquisition unit further includes a login information acquisition sub-unit configured to acquire the login information of the application from the original terminal and send the acquired login information to the target terminal; and the display transferring unit further includes an automatic login sub-unit configured to automatically log in to the corresponding application on the target terminal based on the received login information.

In the technical solution, for some applications such as QQ and Fetion, an appointed account and password are required to log in to the application. To avoid manual input of the user, the corresponding account and password information may be acquired automatically to achieve automatic login.

In any one of the above technical solutions, preferably, the login information acquisition sub-unit includes: an information record sub-module configured to record login information input by a user; or an information request sub-module configured to initiate a request to the application and receive the login information provided by the application.

In the technical solution, the information such as the account and the password input by the user may be recorded by the terminal and may be used for automatic login if display transferring is required. Alternatively, a request may be initiated to the application and the corresponding account and password information may be provided by the application to the original terminal for the automatic login.

In another aspect of the disclosure, a method for display transferring of interface content is further provided. The method includes: a step 302 of establishing a wireless connection between two terminals on which the interface content is to be transferred and determining an original terminal and a target terminal from the two terminals; and a step 304 of acquiring a displayed content on a screen interface of the original terminal and transferring the displayed content to a screen interface of the target terminal.

In the technical solution, for the process of display transferring of the displayed content on the screen interface, for example, a user originally views a Word document on a terminal A whose power may be exhausted or which may be not portable and needs to view the Word document on a terminal B which is fully charged or more portable, in this case, a wireless connection is established between the terminal A and the terminal B and then the Word document displayed originally on the screen interface of the terminal A is displayed on the screen interface of the terminal B, without manual connection and transmission by the user or opening the document or running an application manually by the user. Obviously, besides various documents and files such as a Word document, display transferring of a webpage, music, a video and an application can also be achieved in the above way. The wireless connection herein may be implemented in various connection manners such as an infrared connection, a Bluetooth connection, a wireless local area network and a near field communication technology.

In the above technical solution, preferably, the step of establishing a wireless connection includes: each of the two terminals detecting whether there is a nearby object within a predetermined distance range, the terminal enables a wireless connection function and connects to the searched terminal if there is a nearby object within the predetermined distance range.

In the technical solution, the display transferring process may be triggered by making the two terminals against each other. Specifically, a proximity sensor may be used to detect surroundings of the terminal or the direction of the probe of the proximity sensor. A nearby object within the predetermined distance range may indicate that the user is placing another terminal to be against the terminal, and if the terminal has a display transferring function, the terminal automatically enables the wireless connection function and connects to the searched terminal for implementation of the display transferring.

In any one of the above technical solutions, preferably, the step of establishing a wireless connection further includes: in a case that the two terminals are placed against each other, each of the two terminals acquiring a pressure value sensed by the terminal itself and sending the acquired pressure value to the searched terminal, receiving a pressure value from the searched terminal, and connecting to the terminal corresponding to the received pressure value if a difference between the pressure value sensed by the terminal itself and the received pressure value is less than or equal to a preset difference, or otherwise not connecting to the terminal corresponding to the received pressure value.

In the technical solution, the pressures suffered by the two terminals placed against each other should be equal due to action-reaction of force. Therefore, in order to prevent the terminal from being misconnected to other terminal, it may be judged whether the searched terminal is a correct terminal by detecting and comparing the pressure value. In particle, certain error range may be allowed because of detection error of the pressure value, thereby increasing the probability of successful connection.

In any one of the above technical solutions, preferably, the step of establishing a wireless connection further includes: each of the two terminals acquiring an angle between the terminal itself and a preset reference plane and sending the acquired angle to the searched terminal, receiving an angle from the searched terminal, and connecting to the terminal corresponding to the received angle if the sum of the angle of the terminal itself and the received angle is equal to a preset angle, or otherwise not connecting to the terminal corresponding to the received angle.

In the technical solution, in order to further avoid misconnection, the angle between the terminal and the preset reference plane may be detected, such as an angle between the terminal and a horizontal plane. A rule may be preset, for example, it may be ruled that the screens of the two terminals are placed against each other and towards each other (for example, promoting information may be displayed on the screen of the terminal in a form including words, a schematic picture, an animation or a video), then the sum of angles for the two terminals should be 180 degrees, and the two terminals are not allowed to be connected if the sum of angles is not 180 degrees. In addition, the user may set a habitual placement mode, for example, the back of one terminal is against the screen of another terminal, or the back of one terminal is against the back of another terminal. The detected angle may be also changed, for example, an angle between the screen of the terminal and the horizontal plane may be selected or an angle between the back of the terminal and the horizontal plane may be selected, which may cause the sum of the angles to be different. However, for a condition which is already set, the sum of the corresponding angles is definite, which may be used to judge whether the terminal is a terminal required to be connected.

In any one of the above technical solutions, preferably, the step of determining an original terminal and a target terminal from the two terminals includes: comparing the angle of the terminal itself with the received angle if the sum of the angle of the terminal itself and the received angle is equal to the preset angle, and determining the terminal as the original terminal or the target terminal based on the comparison result.

In the technical solution, after the terminals on which the display transferring is to be performed are determined, the original terminal and the target terminal needs to be determined. The original terminal is a terminal used initially by the user, and the displayed content on the screen interface of the original terminal needs to be transferred to the screen interface of the target terminal. Different determination solutions may be set according to users' habits. For example, in a case that the screens of the two terminals are placed against each other and towards each other, the terminal is placed in a positive direction (the handset is at the upper and the microphone is at the lower) with the direction from the microphone to the handset being the positive direction, and the angle between the back of the terminal and the horizontal plane is the detected angle with the horizontal plane being the reference plane, the terminal with a larger angle may be selected to be the original terminal and the terminal with a smaller angle may be selected to be the target terminal. In other cases, considering various factors such as the placement way of the terminals, the calculation way of the angles and the reference plane, the result of the original terminal and the target terminal determined from the angles may be different. However, for a case which is already set, similarly to the example in the particular case mentioned above, the result is definite and can be used to distinguish the original terminal and the target terminal.

In any one of the above technical solutions, preferably, the step of determining an original terminal and a target terminal from the two terminals further includes: each of the two terminals acquiring its movement velocity in the process of placing the two terminals to be against each other; determining the terminal with a higher movement velocity as the original terminal and determining the terminal with a lower movement velocity as the target terminal.

In the technical solution, in some extreme cases, for example, the two terminals are placed vertically, it is difficult to judge whether the terminal is the original terminal or the target terminal by means of angle. Considering users' psychology, usually one terminal is moved and another terminal is not moved in placing one terminal to be against another terminal. The final result is similar to "placing" the displayed content on the original terminal to the target terminal, and for this action, the terminal with a higher movement velocity may be set as the original terminal and the terminal with a lower movement velocity may be set as the target terminal. An opposite way or other ways may also be used according to users' habits.

In any one of the above technical solutions, preferably, the method further includes: enabling a function about the display transferring of the interface content of the two terminals in response to a received enabling command before step 302.

In the technical solution, a switch is provided, and thus it is avoided that if there is any object approaching the terminal, the wireless connection function is enabled automatically to perform operations such as search and connection in a case that the relative function is not enabled, which may result in a misoperation of the terminal and consume the power of the terminal. The enabling command herein may be generated via a virtual function key on the terminal, or the corresponding function may be enabled by setting a physical key and pressing the physical key.

In any one of the above technical solutions, preferably, the displayed content includes the content displayed on the current screen interface of the original terminal and/or the content running in the background of the original terminal.

In the technical solution, the displayed content may include a document (for example, a Word document, a txt document), a file (for example, a mp3 file, a video file), a webpage, a running application (for example, QQ, Fetion) displayed on the current screen interface of the original terminal, and may also include the above various contents running in the background and not displayed on the current screen interface. Information of the displayed content may be acquired by viewing the task manager or the like. In practice, the user may customize the content on which the display transferring is allowed to be performed according to actual condition.

In any one of the above technical solutions, preferably, the displayed content includes at least one or a combination of: an opened document, a running file, an opened webpage and a running application; and step 304 includes: the original terminal sending the document, the file, a web address of the webpage and/or information of the application to the target terminal; and the target terminal opening the received document, file and/or web address or running a corresponding application corresponding to the received information of the application.

In the technical solution, the document or the file which usually has a small size may be transferred and opened directly. The file with a large size such as a video may be restricted to be transferred by setting a file size allowed to be transferred. A matched application may be found in the target terminal based on information such as the name of the application and the development corporation of the application, and then the matched application is run. In a case that there is no matched application in the target terminal, it may prompt the user to download the application or the application is automatically downloaded and then run.

In any one of the above technical solutions, preferably, step 304 further includes: judging whether a matched application matched with the received information of the application from the original terminal exists in the target terminal, the matched application is run in a case that the matched application exists in the target terminal, and display transferring of the application is not performed in a case that the matched application does not exist in the target terminal.

In the technical solution, the information of the application includes, for example, a name, a version number and a name of a developer of the application. The user may set any one or more of the name, the version number, the name of the developer of the application as the matching item, and the matching item is matched in the target terminal to determine whether there is a matched application in the target terminal. For example, only the name of the application is set for match, and if there is an application having the same name, the application is run. However, the name of the application may be modified freely, and a mistaken judgment may occur. Particularly, some malicious program may be disguised as the application having the same name, which may cause the target terminal to be damaged and the user information to be exposed. Therefore, information of the application is matched to increase the accuracy and enhance the security.

In any one of the above technical solutions, preferably, step 304 further includes: the original terminal sending progress information of the displayed content to the target terminal; and the target terminal adjusting the opened document, file, webpage and/or application based on the received progress information.

In the technical solution, the document originally viewed by the user, the file originally run by the user, the webpage originally browsed by the user and the application originally run by the user may not be in the start page but already browsed or reached to a specific interface, such as the current displayed page number of the document, the browsed location of the webpage, the played time point of the music and the interface of the application. The progress information may be recorded and the same record is reverted to on the target terminal, thereby avoiding the operation such as scrolling or clicking performed manually by the user.

In any one of the above technical solutions, preferably, in a case that login information is required by the application, step 304 further includes: the original terminal acquiring the login information of the application and sending the acquired login information to the target terminal; and the target terminal automatically logging in to the corresponding application based on the received login information.

In the technical solution, for some applications such as QQ and Fetion, an appointed account and password are required to log in to the application. To avoid manual input of the user, the corresponding account and password information may be acquired automatically to achieve automatic login.

In any one of the above technical solutions, preferably, the step of the original terminal acquiring the login information of the application includes: recording login information input by a user; or initiating a request to the application and receiving the login information provided by the application.

In the technical solution, the information such as the account and the password input by the user may be recorded by the terminal and may be used for automatic login if the display transferring is required. Alternatively, a request may be initiated to the application and the corresponding account and password information may be provided by the application to the original terminal for the automatic login.

In another aspect of the disclosure, a terminal is further provided. The terminal includes the system for display transferring of the interface content according to any one of the technical solutions described above.

With the technical solutions provided above, the terminals can be automatically connected to each other and display transferring of the displayed content from one terminal to another terminal is performed, to achieve content transferring and sharing.

### BRIEF DESCRIPTION OF THE DRAWINGS

Figure 1 illustrates a block diagram of a system for display transferring of interface content according to an embodiment of the disclosure;
Figure 2 illustrates a block diagram of a terminal according to an embodiment of the disclosure;
Figure 3 illustrates a flowchart of a method for display transferring of interface content according to an embodiment of the disclosure;
Figure 4 illustrates a schematic diagram of display transferring of interface content according to an embodiment of the disclosure;
Figure 5 illustrates a flowchart of automatic connection of terminals according to an embodiment of the disclosure;
Figure 6A and Figure 6B illustrate schematic diagrams of setting interfaces of a terminal according to an embodiment of the disclosure;
Figure 7 illustrates a flowchart of setting a terminal according to an embodiment of the disclosure;
Figure 8 illustrates a flowchart of a sending process of a terminal according to an embodiment of the disclosure; and
Figure 9 illustrates a flowchart of a receiving process of a terminal according to an embodiment of the disclosure.

### DETAILED DESCRIPTION

In order to understand the above objects, features and advantages of the present disclosure more clearly, the disclosure is further described in details below in conjunction with the drawings and embodiments. It should be noted that the embodiments of the application and features in the embodiments may be combined with each other if there is no conflict.

More details will be set forth in the following descriptions for sufficient understanding of the disclosure. However, the disclosure can also be implemented by other ways different from the way described herein, and therefore, the scope of protection of the disclosure is not limited to embodiments disclosed below.

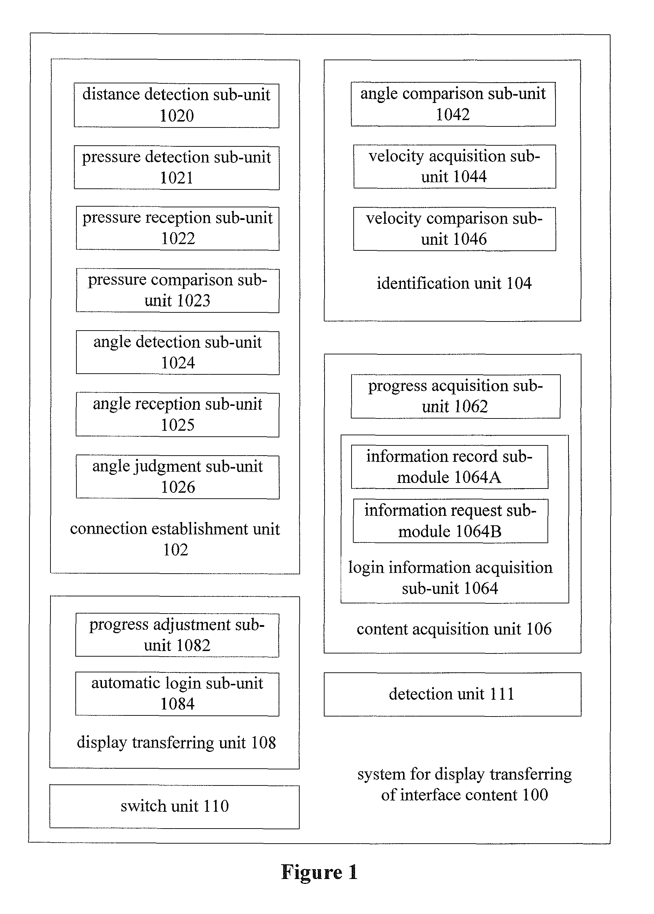

Figure 1 illustrates a block diagram of a system for display transferring of interface content according to an embodiment of the disclosure.

As shown in Figure 1, the system 100 for display transferring of interface content according to the embodiment of the disclosure includes: a connection establishment unit 102 configured to establish a wireless connection between two terminals on which the interface content is to be transferred; an identification unit 104 configured to determine an original terminal and a target terminal from the two terminals; a content acquisition unit 106 configured to acquire a displayed content on a screen interface of the original terminal; and a display transferring unit 108 configured to transfer the displayed content to a screen interface of the target terminal.

In the technical solution, for the process of display transferring of the displayed content on the screen interface, for example, a user originally views a Word document on a terminal A whose power may be exhausted or which may be not portable and needs to view the Word document on a terminal B which is fully charged or more portable, in this case, a wireless connection is established between the terminal A and the terminal B and then the Word document displayed originally on the screen interface of the terminal A is displayed on the screen interface of the terminal B, without manual connection and transmission by the user or opening the document or running an application manually by the user. Obviously, besides various documents and files such as a Word document, display transferring of a webpage, music, a video and an application can also be achieved in the above way. The wireless connection herein may be implemented in various connection manners such as an infrared connection, a Bluetooth connection, a wireless local area network and a near field communication technology.

In the above technical solution, preferably, the connection establishment unit 102 includes a distance detection sub-unit 1020 configured to detect whether there is a nearby object within a predetermined distance range of each of the two terminals. The connection establishment unit enables a wireless connection function and connects to the searched terminal if there is a nearby object within the predetermined distance range of the terminal.

In the technical solution, the display transferring process may be triggered by making the two terminals against each other. Specifically, a proximity sensor may be used to detect surroundings of the terminal or the direction of the probe of the proximity sensor. A nearby object within the predetermined distance range may indicate that the user is placing another terminal to be against the terminal, and if the terminal has a display transferring function, the terminal automatically enables the wireless connection function and connects to the searched terminal for implementation of the display transferring.

In any one of the above technical solutions, preferably, the connection establishment unit 102 further includes: a pressure detection sub-unit 1021 configured to, in a case that the two terminals are placed against each other, acquire a pressure value sensed by each of the two terminals and send the acquired pressure value to the searched terminal; a pressure reception sub-unit 1022 configured to receive the pressure value from the searched terminal; and a pressure comparison sub-unit 1023 configured to compare a difference between the pressure value sensed by each of the two terminals and the received pressure value with a preset difference, the connection establishment unit 102 respectively connects the two terminals to the terminals corresponding to the received pressure values in a case that the difference is less than or equal to the preset difference, or otherwise the two terminals are not respectively connected to the terminals corresponding to the received pressure values.

In the technical solution, the pressures suffered by the two terminals placed against each other should be equal due to action-reaction of force. Therefore, in order to prevent the terminal from being misconnected to other terminal, it may be judged whether the searched terminal is a correct terminal by detecting and comparing the pressure value. In particle, certain error range may be allowed because of detection error of the pressure value, thereby increasing the probability of successful connection.

In any one of the above technical solutions, preferably, the connection establishment unit 102 further includes: an angle detection sub-unit 1024 configured to acquire an angle between each of the two terminals and a preset reference plane and send the acquired angle to the searched terminal; an angle reception sub-unit 1025 configured to receive the angle from the searched terminal; and an angle judgment sub-unit 1026 configured to judge whether the sum of the angle of the terminal itself and the received angle is equal to a preset angle, the connection establishment unit 102 connects respectively the two terminals to the terminals corresponding to the received angles in a case that the sum is equal to the preset angle, or otherwise the two terminals are not respectively connected to the terminals corresponding to the received angles.

In the technical solution, in order to further avoid misconnection, the angle between the terminal and the preset reference plane may be detected, such as an angle between the terminal and a horizontal plane. A rule may be preset, for example, it may be ruled that the screens of the two terminals are placed against each other and towards each other (for example, promoting information may be displayed on the screen of the terminal in a form including words, a schematic picture, an animation or a video), then the sum of angles for the two terminals should be 180 degrees, and the two terminals are not allowed to be connected if the sum of angles is not 180 degrees. In addition, the user may set a habitual placement mode, for example, the back of one terminal is against the screen of another terminal, or the back of one terminal is against the back of another terminal. The detected angle may be also changed, for example, an angle between the screen of the terminal and the horizontal plane may be selected or an angle between the back of the terminal and the horizontal plane may be selected, which may cause the sum of the angles to be different. However, for a condition which is already set, the sum of the corresponding angles is definite, which may be used to judge whether the terminal is a terminal required to be connected.

In any one of the above technical solutions, preferably, the identification unit 104 includes an angle comparison sub-unit 1042 configured to compare the angle of the terminal itself with the received angle in a case that the sum of the angle of the terminal itself and the received angle is equal to the preset angle, and determine the terminal as the original terminal or the target terminal based on the comparison result.

In the technical solution, after the terminals on which the display transferring is to be performed are determined, the original terminal and the target terminal needs to be determined. The original terminal is a terminal used initially by the user, and the displayed content on the screen interface of the original terminal needs to be transferred to the screen interface of the target terminal. Different determination solutions may be set according to users' habits. For example, in a case that the screens of the two terminals are placed against each other and towards each other, the terminal is placed in a positive direction (the handset is at the upper and the microphone is at the lower) with the direction from the microphone to the handset being the positive direction, and the angle between the back of the terminal and the horizontal plane is the detected angle with the horizontal plane being the reference plane, the terminal with a larger angle may be selected to be the original terminal and the terminal with a smaller angle may be selected to be the target terminal. In other cases, considering various factors such as the placement way of the terminals, the calculation way of the angles and the reference plane, the result of the original terminal and the target terminal determined from the angles may be different. However, for a case which is already set, similarly to the example in the particular case mentioned above, the result is definite and can be used to distinguish the original terminal and the target terminal.

In any one of the above technical solutions, preferably, the identification unit 104 further includes: a velocity acquisition sub-unit 1044 configured to acquire a movement velocity of each of the two terminals in the process of placing the two terminals to be against each other; and a velocity comparison sub-unit 1046 configured to compare the movement velocities of the two terminals, where the terminal with a higher movement velocity is determined as the original terminal and the terminal with a lower movement velocity is determined as the target terminal.

In the technical solution, in some extreme cases, for example, the two terminals are placed vertically, it is difficult to judge whether the terminal is the original terminal or the target terminal by means of angle. Considering users' psychology, usually one terminal is moved and another terminal is not moved in placing one terminal to be against another terminal. The final result is similar to "placing" the displayed content on the original terminal to the target terminal, and for this action, the terminal with a higher movement velocity may be set as the original terminal and the terminal with a lower movement velocity may be set as the target terminal. An opposite way or other ways may also be used according to users' habits.

In any one of the above technical solutions, preferably, the system 100 further includes a switch unit 110 configured to enable a function about the display transferring of the interface content of the two terminals in response to a received enabling command.

In the technical solution, a switch is provided, and thus it is avoided that if there is any object approaching the terminal, the wireless connection function is enabled automatically to perform operations such as search and connection in a case that the relative function is not enabled, which may result in a misoperation of the terminal and consume the power of the terminal. The enabling command herein may be generated via a virtual function key on the terminal, or the corresponding function may be enabled by setting a physical key and pressing the physical key.

In any one of the above technical solutions, preferably, the displayed content includes the content displayed on the current screen interface of the original terminal and/or the content running in the background of the original terminal.

In the technical solution, the displayed content may include a document (for example, a Word document, a txt document), a file (for example, a mp3 file, a video file), a webpage, a running application (for example, QQ, Fetion) displayed on the current screen interface of the original terminal, and may also include the above various contents running in the background and not displayed on the current screen interface. Information of the displayed content may be acquired by viewing the task manager or the like. In practice, the user may customize the content on which the display transferring is allowed to be performed according to actual condition.

In any one of the above technical solutions, preferably, the displayed content includes at least one or a combination of: an opened document, a running file, an opened webpage and a running application; and the content acquisition unit 106 is configured to send the document, the file, a web address of the webpage and/or information of the application in the original terminal to the target terminal; the display transferring unit 108 is configured to open the received document, file and/or web address on the target terminal or running a corresponding application corresponding to the received information of the application on the target terminal.

In the technical solution, the document or the file which usually has a small size may be transferred and opened directly. The file with a large size such as a video may be restricted to be transferred by setting a file size allowed to be transferred. A matched application may be found in the target terminal based on information such as the name of the application and the development corporation of the application, and then the matched application is run. In a case that there is no matched application in the target terminal, it may prompt the user to download the application or the application is automatically downloaded and then run.

In any one of the above technical solutions, preferably, the system 100 further includes a detection unit 111 configured to judge whether a matched application matched with the received information of the application from the original terminal exists in the target terminal, the matched application is run in a case that the matched application exists in the target terminal, or otherwise display transferring of the application is not performed.

In the technical solution, the information of the application includes, for example, a name, a version number and a name of a developer of the application. The user may set any one or more of the name, the version number, the name of the developer of the application as the matching item, and the matching item is matched in the target terminal to determine whether there is a matched application in the target terminal. For example, only the name of the application is set for match, and if there is an application having the same name, the application is run. However, the name of the application may be modified freely, and a mistaken judgment may occur. Particularly, some malicious program may be disguised as the application having the same name, which may cause the target terminal to be damaged and the user information to be exposed. Therefore, information of the application is matched to increase the accuracy and enhance the security.

In any one of the above technical solutions, preferably, the content acquisition unit 106 further includes a progress acquisition sub-unit 1062 configured to acquire progress information of the displayed content from the original terminal and send the acquired progress information to the target terminal; and the display transferring unit 108 further includes a progress adjustment sub-unit 1082 configured to adjust the opened document, file, webpage and/or application in the target terminal based on the received progress information.

In the technical solution, the document originally viewed by the user, the file originally run by the user, the webpage originally browsed by the user and the application originally run by the user may not be in the start page but already browsed or reached to a specific interface, such as the current displayed page number of the document, the browsed location of the webpage, the played time point of the music and the interface of the application. The progress information may be recorded and the same record is reverted to on the target terminal, thereby avoiding the operation such as scrolling or clicking performed manually by the user.

In any one of the above technical solutions, preferably, in a case that login information is required by the application, the content acquisition unit 106 further includes a login information acquisition sub-unit 1064 configured to acquire the login information of the application from the original terminal and send the acquired login information to the target terminal; and the display transferring unit 108 further includes an automatic login sub-unit 1084 configured to automatically log in to the corresponding application on the target terminal based on the received login information.

In the technical solution, for some applications such as QQ and Fetion, an appointed account and password are required to log in to the application. To avoid manual input of the user, the corresponding account and password information may be acquired automatically to achieve automatic login.

In any one of the above technical solutions, preferably, the login information acquisition sub-unit 1064 includes: an information record sub-module 1064A configured to record login information input by a user; or an information request sub-module 1064B configured to initiate a request to the application and receive the login information provided by the application.

In the technical solution, the information such as the account and the password input by the user may be recorded by the terminal and may be used for automatic login if display transferring is required. Alternatively, a request may be initiated to the application and the corresponding account and password information may be provided by the application to the original terminal for the automatic login.

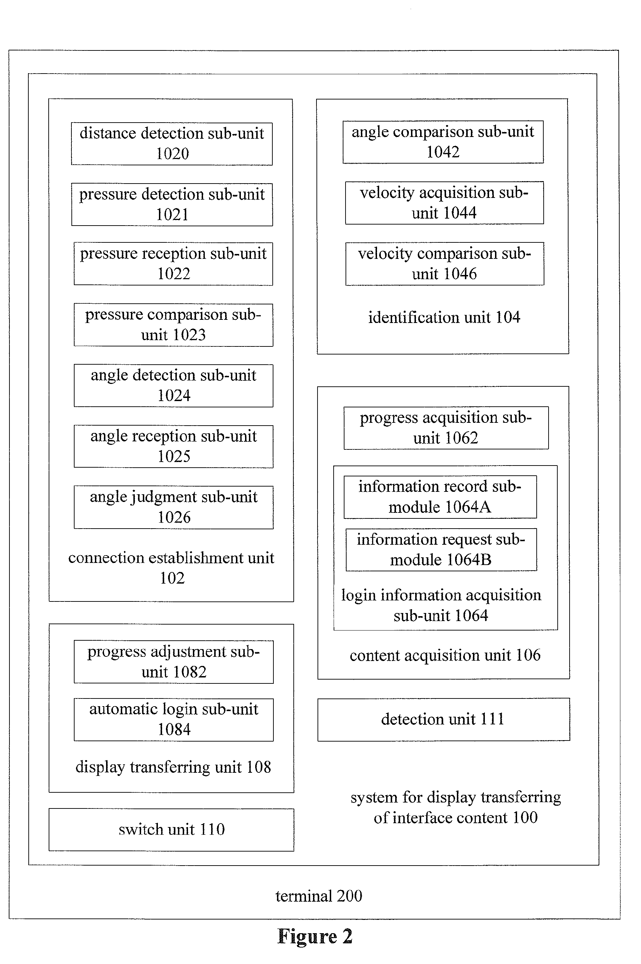

Figure 2 illustrates a block diagram of a terminal according to an embodiment of the disclosure.

As shown in Figure 2, the terminal 200 according to the embodiment of the disclosure includes any one of the systems 100 for display transferring of interface content as shown in Figure 1.

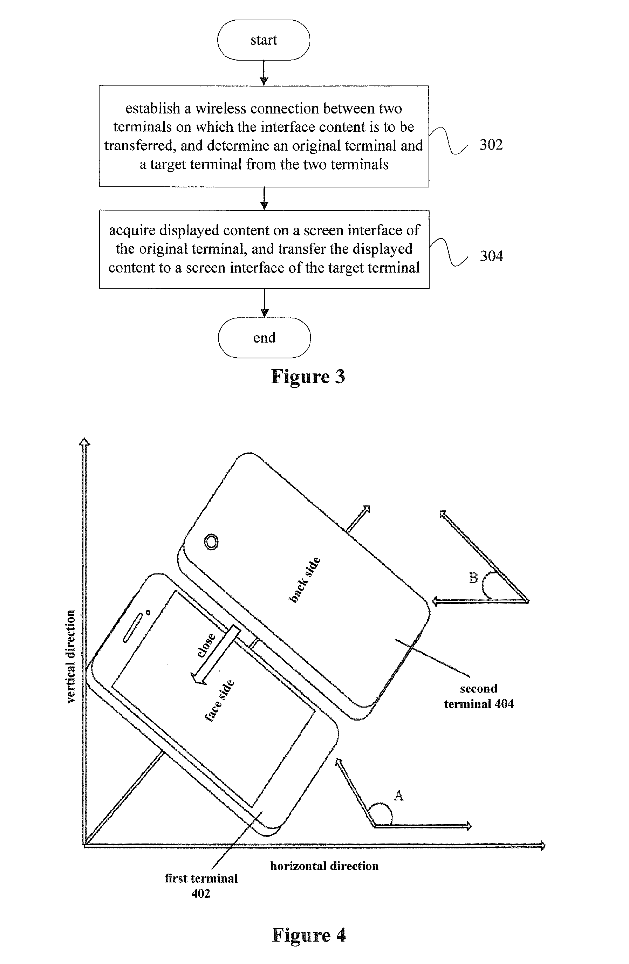

Figure 3 illustrates a flowchart of a method for display transferring of interface content according to an embodiment of the disclosure.

As shown in Figure 3, the method for display transferring of the interface content according to the embodiment of the disclosure includes: a step 302 of establishing a wireless connection between two terminals on which the interface content is to be transferred and determining an original terminal and a target terminal from the two terminals; and a step 304 of acquiring a displayed content on a screen interface of the original terminal and transferring the displayed content to a screen interface of the target terminal.

In the technical solution, for the process of display transferring of the displayed content on the screen interface, for example, a user originally views a Word document on a terminal A whose power may be exhausted or which may be not portable and needs to view the Word document on a terminal B which is fully charged or more portable, in this case, a wireless connection is established between the terminal A and the terminal B and then the Word document displayed originally on the screen interface of the terminal A is displayed on the screen interface of the terminal B, without manual connection and transmission by the user or opening the document or running an application manually by the user. Obviously, besides various documents and files such as a Word document, display transferring of a webpage, music, a video and an application can also be achieved in the above way. The wireless connection herein may be implemented in various connection manners such as an infrared connection, a Bluetooth connection, a wireless local area network and a near field communication technology.

In the above technical solution, preferably, the step of establishing a wireless connection includes: each of the two terminals detecting whether there is a nearby object within a predetermined distance range, the terminal enables a wireless connection function and connects to the searched terminal if there is a nearby object within the predetermined distance range.

In the technical solution, the display transferring process may be triggered by making the two terminals against each other. Specifically, a proximity sensor may be used to detect surroundings of the terminal or the direction of the probe of the proximity sensor. A nearby object within the predetermined distance range may indicate that the user is placing another terminal to be against the terminal, and if the terminal has a display transferring function, the terminal automatically enables the wireless connection function and connects to the searched terminal for implementation of the display transferring.

In any one of the above technical solutions, preferably, the step of establishing a wireless connection further includes: in a case that the two terminals are placed against each other, each of the two terminals acquiring a pressure value sensed by the terminal itself and sending the acquired pressure value to the searched terminal, receiving a pressure value from the searched terminal, and connecting to the terminal corresponding to the received pressure value if a difference between the pressure value sensed by the terminal itself and the received pressure value is less than or equal to a preset difference, or otherwise not connecting to the terminal corresponding to the received pressure value.

In the technical solution, the pressures suffered by the two terminals placed against each other should be equal due to action-reaction of force. Therefore, in order to prevent the terminal from being misconnected to other terminal, it may be judged whether the searched terminal is a correct terminal by detecting and comparing the pressure value. In particle, certain error range may be allowed because of detection error of the pressure value, thereby increasing the probability of successful connection.

In any one of the above technical solutions, preferably, the step of establishing a wireless connection further includes: each of the two terminals acquiring an angle between the terminal itself and a preset reference plane and sending the acquired angle to the searched terminal, receiving an angle from the searched terminal, and connecting to the terminal corresponding to the received angle if the sum of the angle of the terminal itself and the received angle is equal to a preset angle, or otherwise not connecting to the terminal corresponding to the received angle.

In the technical solution, in order to further avoid misconnection, the angle between the terminal and the preset reference plane may be detected, such as an angle between the terminal and a horizontal plane. A rule may be preset, for example, it may be ruled that the screens of the two terminals are placed against each other and towards each other (for example, promoting information may be displayed on the screen of the terminal in a form including words, a schematic picture, an animation or a video), then the sum of angles for the two terminals should be 180 degrees, and the two terminals are not allowed to be connected if the sum of angles is not 180 degrees. In addition, the user may set a habitual placement mode, for example, the back of one terminal is against the screen of another terminal, or the back of one terminal is against the back of another terminal. The detected angle may be also changed, for example, an angle between the screen of the terminal and the horizontal plane may be selected or an angle between the back of the terminal and the horizontal plane may be selected, which may cause the sum of the angles to be different. However, for a condition which is already set, the sum of the corresponding angles is definite, which may be used to judge whether the terminal is a terminal required to be connected.

In any one of the above technical solutions, preferably, the step of determining an original terminal and a target terminal from the two terminals includes: comparing the angle of the terminal itself with the received angle if the sum of the angle of the terminal itself and the received angle is equal to the preset angle, and determining the terminal as the original terminal or the target terminal based on the comparison result.

In the technical solution, after the terminals on which the display transferring is to be performed are determined, the original terminal and the target terminal needs to be determined. The original terminal is a terminal used initially by the user, and the displayed content on the screen interface of the original terminal needs to be transferred to the screen interface of the target terminal. Different determination solutions may be set according to users' habits. For example, in a case that the screens of the two terminals are placed against each other and towards each other, the terminal is placed in a positive direction (the handset is at the upper and the microphone is at the lower) with the direction from the microphone to the handset being the positive direction, and the angle between the back of the terminal and the horizontal plane is the detected angle with the horizontal plane being the reference plane, the terminal with a larger angle may be selected to be the original terminal and the terminal with a smaller angle may be selected to be the target terminal. In other cases, considering various factors such as the placement way of the terminals, the calculation way of the angles and the reference plane, the result of the original terminal and the target terminal determined from the angles may be different. However, for a case which is already set, similarly to the example in the particular case mentioned above, the result is definite and can be used to distinguish the original terminal and the target terminal.

In any one of the above technical solutions, preferably, the step of determining an original terminal and a target terminal from the two terminals further includes: each of the two terminals acquiring its movement velocity in the process of placing the two terminals to be against each other; determining the terminal with a higher movement velocity as the original terminal and determining the terminal with a lower movement velocity as the target terminal.

In the technical solution, in some extreme cases, for example, the two terminals are placed vertically, it is difficult to judge whether the terminal is the original terminal or the target terminal by means of angle. Considering users' psychology, usually one terminal is moved and another terminal is not moved in placing one terminal to be against another terminal. The final result is similar to "placing" the displayed content on the original terminal to the target terminal, and for this action, the terminal with a higher movement velocity may be set as the original terminal and the terminal with a lower movement velocity may be set as the target terminal. An opposite way or other ways may also be used according to users' habits.

In any one of the above technical solutions, preferably, the method further includes: enabling a function about the display transferring of the interface content of the two terminals in response to a received enabling command before step 302.

In the technical solution, a switch is provided, and thus it is avoided that if there is any object approaching the terminal, the wireless connection function is enabled automatically to perform operations such as search and connection in a case that the relative function is not enabled, which may result in a misoperation of the terminal and consume the power of the terminal. The enabling command herein may be generated via a virtual function key on the terminal, or the corresponding function may be enabled by setting a physical key and pressing the physical key.

In any one of the above technical solutions, preferably, the displayed content includes the content displayed on the current screen interface of the original terminal and/or the content running in the background of the original terminal.

In the technical solution, the displayed content may include a document (for example, a Word document, a txt document), a file (for example, a mp3 file, a video file), a webpage, a running application (for example, QQ, Fetion) displayed on the current screen interface of the original terminal, and may also include the above various contents running in the background and not displayed on the current screen interface. Information of the displayed content may be acquired by viewing the task manager or the like. In practice, the user may customize the content on which the display transferring is allowed to be performed according to actual condition.

In any one of the above technical solutions, preferably, the displayed content includes at least one or a combination of: an opened document, a running file, an opened webpage and a running application; and step 304 includes: the original terminal sending the document, the file, a web address of the webpage and/or information of the application to the target terminal; and the target terminal opening the received document, file and/or web address or running a corresponding application corresponding to the received information of the application.

In the technical solution, the document or the file which usually has a small size may be transferred and opened directly. The file with a large size such as a video may be restricted to be transferred by setting a file size allowed to be transferred. A matched application may be found in the target terminal based on information such as the name of the application and the development corporation of the application, and then the matched application is run. In a case that there is no matched application in the target terminal, it may prompt the user to download the application or the application is automatically downloaded and then run.

In any one of the above technical solutions, preferably, step 304 further includes: judging whether a matched application matched with the received information of the application from the original terminal exists in the target terminal, the matched application is run in a case that the matched application exists in the target terminal, and display transferring of the application is not performed in a case that the matched application does not exist in the target terminal.

In the technical solution, the information of the application includes, for example, a name, a version number and a name of a developer of the application. The user may set any one or more of the name, the version number, the name of the developer of the application as the matching item, and the matching item is matched in the target terminal to determine whether there is a matched application in the target terminal. For example, only the name of the application is set for match, and if there is an application having the same name, the application is run. However, the name of the application may be modified freely, and a mistaken judgment may occur. Particularly, some malicious program may be disguised as the application having the same name, which may cause the target terminal to be damaged and the user information to be exposed. Therefore, information of the application is matched to increase the accuracy and enhance the security.

In any one of the above technical solutions, preferably, step 304 further includes: the original terminal sending progress information of the displayed content to the target terminal; and the target terminal adjusting the opened document, file, webpage and/or application based on the received progress information.

In the technical solution, the document originally viewed by the user, the file originally run by the user, the webpage originally browsed by the user and the application originally run by the user may not be in the start page but already browsed or reached to a specific interface, such as the current displayed page number of the document, the browsed location of the webpage, the played time point of the music and the interface of the application. The progress information may be recorded and the same record is reverted to on the target terminal, thereby avoiding the operation such as scrolling or clicking performed manually by the user.

In any one of the above technical solutions, preferably, in a case that login information is required by the application, step 304 further includes: the original terminal acquiring the login information of the application and sending the acquired login information to the target terminal; and the target terminal automatically logging in to the corresponding application based on the received login information.

In the technical solution, for some applications such as QQ and Fetion, an appointed account and password are required to log in to the application. To avoid manual input of the user, the corresponding account and password information may be acquired automatically to achieve automatic login.

In any one of the above technical solutions, preferably, the step of the original terminal acquiring the login information of the application includes: recording login information input by a user; or initiating a request to the application and receiving the login information provided by the application.

In the technical solution, the information such as the account and the password input by the user may be recorded by the terminal and may be used for automatic login if the display transferring is required. Alternatively, a request may be initiated to the application and the corresponding account and password information may be provided by the application to the original terminal for the automatic login.

Figure 4 illustrates a schematic diagram of display transferring of interface content according to an embodiment of the disclosure.

As shown in Figure 4, a user firstly operates on a terminal, and the following operations may be executed if the user wants to continuously operate on other terminal due to low power of the terminal or other purpose.

Given that the two terminals are a first terminal 402 and a second terminal 404 respectively. The two terminals are approaching to each other in a preset way, for example, in an approaching way that the screens of the two terminals are placed towards each other. Proximity sensors arranged on the first terminal 402 and the second terminal 404 are used to sense whether there is other object within a predetermined distance. If other object is sensed or it is detected that the distance from the object to the proximity sensor is less than a predetermined distance threshold, a wireless connection function of the terminal is enabled, for example, Bluetooth is enabled, and the nearby terminal is searched. Herein, considering that the terminal can not judge whether the nearby object is another terminal, a switch in a form of software or physical key may be set and the above and subsequent functions are performed only if the user enables the display transferring function via the switch, therefore, power consumption caused by repeatedly enabling and disabling the wireless connection function due to misjudgment is avoided.

The first terminal 402 and the second terminal 404 are placed against each other, and the pressure generated by "against each other" may be detected by pressure sensors installed respectively on the two terminals. The pressures detected by the first terminal 402 and the second terminal 404 should be equal in theory due to action-reaction of force. Therefore, the pressure value may be compared for the terminal searched by each of the two terminals. If the pressure value of the terminal is equal to the pressure value of the searched terminal, it is considered that the searched terminal is the terminal placed against the terminal. An error range may be set, and the two pressure values detected by the two terminals may be considered equal if the difference between the two pressure values is in the error range, to avoid tiny error affecting the judgment result in practice.

Mutual identification and wireless connection between the first terminal 402 and the second terminal 404 are achieved by the above distance detection and pressure detection. In addition, which one of the two terminals is the original terminal and which one of the two terminals is the target terminal are also required to be identified, so the displayed content on the screen interface of the original terminal is transferred to the screen interface of the target terminal.

The original terminal and the target terminal may be identified by means of angle. A rule for placement may be made for the first terminal 402 and the second terminal 404 against each other. For example, the screens of the two terminals are placed towards each other, the two terminals are not placed vertically, and the angle between the screen of the terminal and the horizontal plane is used as a detected angle, therefore, the corresponding transferring relationship may be determined based on the detected angle. For example, the detected angle corresponding to the first terminal 402 is A, and the detected angle corresponding to the second terminal 404 is B, as shown in Figure 4. Since A is greater than B, the first terminal 402 is set as the target terminal and the second terminal 404 is set as the original terminal. In practice, the setting way and the judgment rule may be defined by the user or the manufacturer. The placement and judgment way as shown in Figure 4 is usually used considering general users' psychology. The specific placement and judgment way may be illustrated to guide the user by presenting a word, picture, animation, video and the like on the screen interface of the terminal.

In addition, the process of making a judgment by means of angle is cumbersome, and an accurate judgment can not be achieved in some cases such as both the two terminals being placed vertically to the horizontal plane. Therefore, other ways may be used to make a judgment. For example, the entire operation process may be as follows. The terminal to be used as the original terminal is moved to be against the target terminal, and the entire action is similar to directly "placing" the displayed content of the original terminal to the target terminal, which satisfies users' psychology. In this case, an accurate judgment can be achieved by detecting the movement velocities of the two terminals. The velocity judgment and the angle judgment may be combined or may be implemented separately.

After the above process is completed, the opened document, webpage, application displayed on the current screen interface of the original terminal or all applications running in the background of the original terminal may be transferred to and displayed on the target terminal. From the display effect on the target terminal, the displayed content on the original terminal is "transferred" to the target terminal, i.e., the same document, webpage, application are opened. Specifically, files with a small size such as a Word document, a txt document and an mp3 file may be sent directly to the target terminal via a wireless transmission and be opened on the target terminal; for a webpage, a web address of the webpage may be sent to the target terminal via a wireless transmission and be opened on the target terminal; for an application, a corresponding application may be searched and be automatically opened in the target terminal, and if the application does not exist in the target terminal, it may prompt the user to download the application or the application is downloaded automatically.

The original terminal may further acquire progress information of the displayed content, for example, a page number of a Word document that is opened, a time point that an mp3 file is played to. The progress information is then sent to the target terminal, and thus the content opened on the target terminal is executed to the corresponding progress.

For some applications required to be logged in to, information such as a login account and a password may be acquired and sent to the target terminal by the original terminal. The application is logged in to automatically using the acquired account and password after the application is run by the target terminal. The information such as the account and the password may be recorded by the original terminal when being input by the user; or the information may be provided by the application by initiating a request to the application.

It should be noted that the first terminal 402 and the second terminal 404 as shown in Figure 4 are illustrated schematically, and the terminal may be various terminals in practice, such as a mobile phone, a tablet computer, a personal computer and a PDA.

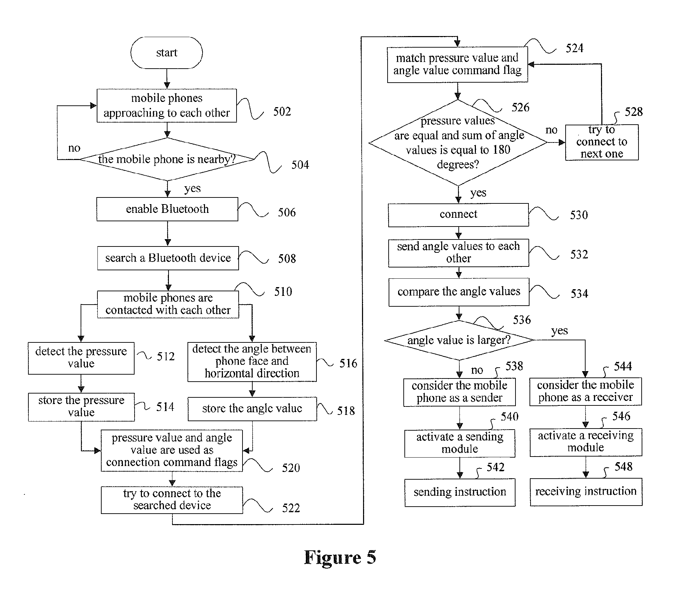

The processes such as identifying and pairing, setting, display transferring are described in details below in conjunction with Figure 5 to Figure 9 by taking two mobile phones as an example.

Figure 5 illustrates a flowchart of automatic connection of terminals according to an embodiment of the disclosure.

As shown in Figure 5, the flow of automatic connection of terminals according to the embodiment of the disclosure includes the following steps.

In step 502, the two mobile phones are placed adjacent to each other. Specifically, screens of the two mobile phones are placed towards each other.

In step 504, each of the two mobile phones judges whether there is a nearby object. Specifically, whether there is a nearby object may be judged by a proximity sensor arranged on the mobile phone. If there is a nearby object, step 506 is preformed, or otherwise the judgment is continued.

In step 506, Bluetooth is enabled. In order to avoid that the mobile phone is triggered to enable Bluetooth by other object in a case that the nearby object is not a mobile phone and thus the power is consumed, a switch may be set. The nearby object is detected only if the display transferring function is enabled by the user via the switch.

In step 508, other nearby devices are searched via Bluetooth.

In step 510, the two mobile phones are contacted with each other and placed against each other.

In step 512, each of the two mobile phones detects the pressure value generated by "against each other".

In step 514, each of the two mobile phones stores its detected pressure value.

In step 516, each of the two mobile phones detects the angle between its face side (screen) and a horizontal direction (a horizontal plane).

In step 518, each of the two mobile phones stores its detected angle value.

In step 520, the pressure value and the angle value are used as connection command flags.

In step 522, it is tried to connect to the searched device.

In step 524, the pressure value detected by the mobile phone are matched with the pressure value detected by the device that the mobile phone tries to connect to, and the angle value detected by the mobile phone are matched with the angle value detected by the device that the mobile phone tries to connect to.

In step 526, since the screens of the two mobile phones are placed towards each other and against each other, the detected pressure values should be equal to each other and the sum of the angle values should be equal to 180 degrees in theory, with certain error range allowed. If the above condition is met, it is determined that the device that the mobile phone tries to connect to is the other mobile phone placed against the mobile phone; or otherwise the device that the mobile phone tries to connect to is not the other mobile phone placed against the mobile phone. Therefore, in a case that the above condition is met, step 530 is performed; or otherwise step 528 is performed.

In step 528, it is tried to connect to a next searched device, and step 524 is returned to.

In step 530, the device is connected.

In step 532, the two mobile phones send their detected angle values to each other.

In step 534, the two angle values are compared. A rule for placement of the mobile phones may be preset. For example, the mobile phone as the original terminal and the mobile phone as the target terminal are placed in a certain way such that the original terminal and the target terminal can be determined based on the angle value between each of the mobile phones and a preset reference plane.

In step 536, step 544 is performed for the mobile phone with a larger angle, and step 538 is performed for the mobile phone with a smaller angle.

In step 538, the mobile phone is considered as a sender, namely the original terminal.

In step 540, a sending module of the mobile phone is activated.

In step 542, information about the displayed content, such as a document, a web address, a name of an application and login information, is sent to a receiver in response to a sending instruction.

In step 544, the mobile phone is considered as the receiver, namely the target terminal.

In step 546, a receiving module of the mobile phone is activated.

In step 548, the information sent by the sender is received in response to a receiving instruction, and the corresponding document, web address or application is opened. If login information exists, the corresponding application is automatically logged in to according to the received login information.

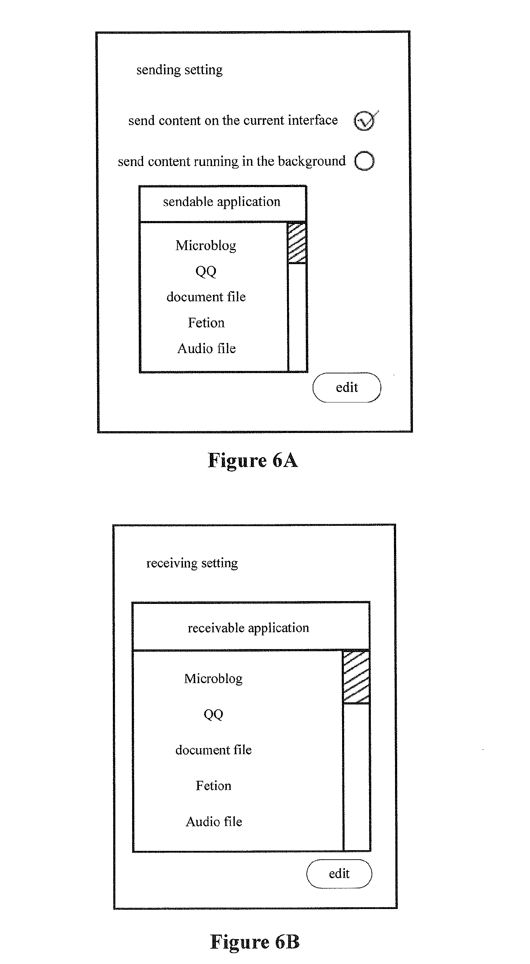

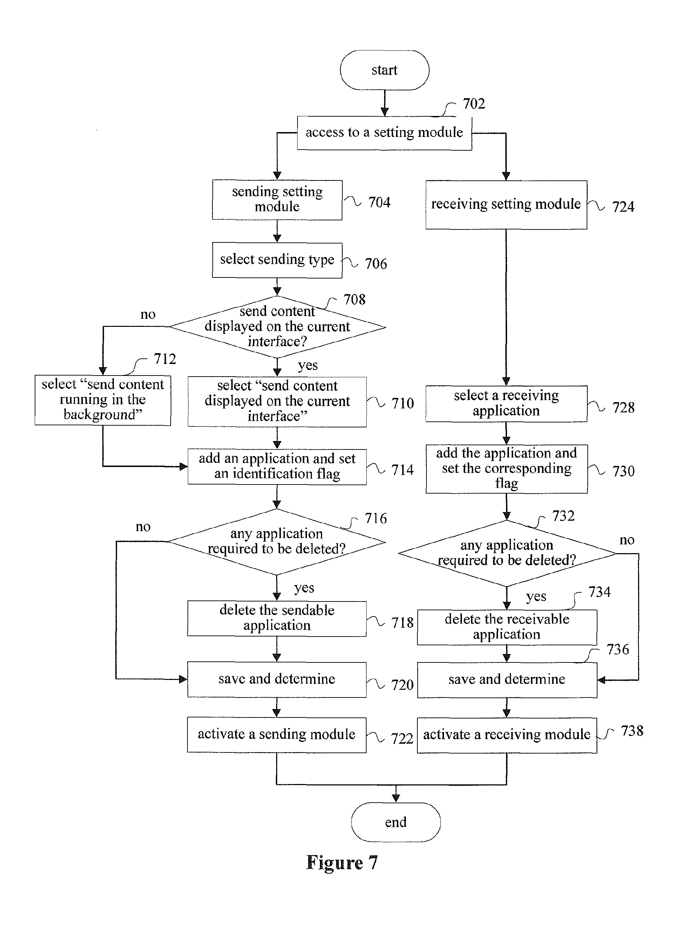

Figure 6A and Figure 6B illustrate schematic diagrams of setting interfaces of a terminal according to an embodiment of the disclosure. Figure 7 illustrates a flowchart of setting a terminal according to an embodiment of the disclosure.

As shown in Figure 7, the flow of setting a terminal according to the embodiment of the disclosure includes the following steps.

In step 702, a setting module of the mobile phone is accessed.

Steps 704 to 722 are steps for setting the sender.

In step 704, it is a sending setting module in a case of a sender. For example, Figure 6A illustrates a schematic diagram of the setting interface of the original terminal (sender).

In step 706, a sending type may be selected, such as "sending content displayed on the current interface" or "sending content running in the background" as shown in Figure 6A.

In step 708, step 710 is performed in a case of sending content displayed on the current interface; or otherwise step 712 is performed.

In step 710, the option of "sending content displayed on the current interface" is selected.

In step 712, the option of "sending content running in the background" is selected.

In step 714, an application is added and an identification flag is set. The application on which the display transferring can be performed is selected, such as "microblog", "QQ" and "document file" as shown in Figure 6A, and the selected application is distinguished from other unselected applications by setting the identification flag for the selected application.

In step 716, it is judged whether there is an application required to be deleted. An edit operation may be performed on the selected application on which the display transferring can be performed. Step 718 is performed if there is an application required to be deleted; or otherwise step 720 is performed.

In step 718, the application identified originally as "sendable" is deleted according to the selection of the user, to make the display transferring of the application can not be performed.

In step 720, saving and determination are performed.

In step 722, the sending module is activated, and the display transferring function is allowed to be performed.

Steps 724 to 738 are steps for setting the receiver.

In step 724, it is a receiving setting module in a case of a receiver. For example,

Figure 6B illustrates a schematic diagram of the setting interface of the target terminal (receiver).

In step 728, a receiving application may be selected.

In step 730, specifically, an application is added and an identification flag is set. The application on which the display transferring can be performed is selected, such as "microblog", "QQ" and "document file" as shown in Figure 6B, and the selected application is distinguished from other unselected applications by setting the identification flag for the selected application.

In step 732, it is judged whether there is an application required to be deleted. An edit operation may be performed on the selected application on which the display transferring can be performed. Step 734 is performed if there is an application required to be deleted; or otherwise step 736 is performed.

In step 734, the application identified originally as "receivable" is deleted according to the selection of the user, to make the display transferring of the application can not be performed.

In step 736, saving and determination are performed.

In step 738, the receiving module is activated, and the display transferring function is allowed to be performed.

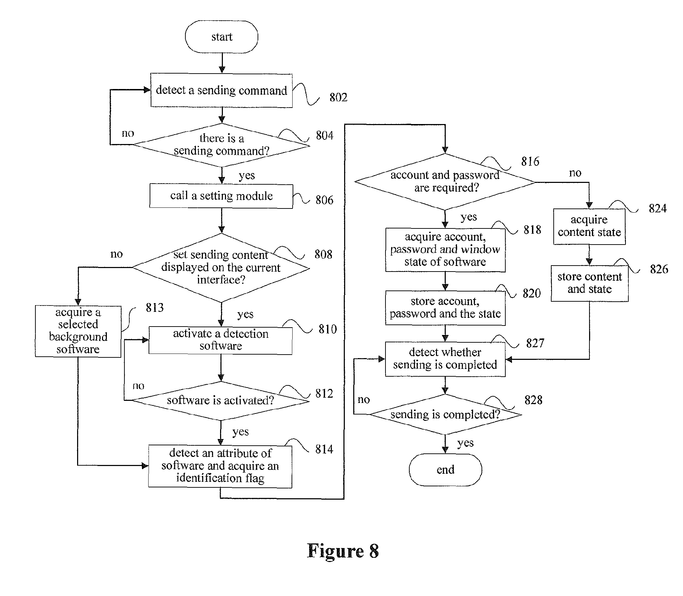

Figure 8 illustrates a flowchart of a sending process of a terminal according to an embodiment of the disclosure.

As shown in Figure 8, the flow of the sending process of the terminal according to the embodiment of the disclosure includes the following steps.

In step 802, it is detected whether there is a sending command.

In step 804, step 806 is performed if there is a sending command; or otherwise step 802 is returned to.

In step 806, a setting module is called to view preset parameters.

In step 808, it is judged whether sending content displayed on the current interface is set. Step 810 is performed if sending content displayed on the current interface is set; or otherwise step 813 is performed.

In step 810, a detection software is activated to detect the displayed content on the current interface.

In step 812, it is judged whether the detection software is activated normally. Step 814 is performed if the detection software is activated normally; or otherwise step 810 is returned to.

In step 813, a selected background software is acquired, which may be a software meeting a preset rule (such as the setting interface as shown in Figure 6A), or may be selected by the user in a real-time manner.

In step 814, an attribute of the software is detected, and an identification flag of the software is acquired. The identification flag herein may be, for example, a name of the software or the name of the developer. The attribute includes such as running progress of the software. The "software" herein not only refers to an application but also includes a document and a file.

In step 816, it is judged whether an account and a password are required. Step 818 is performed if the account and password are required; or otherwise step 824 is performed.

In step 818, for the application that the account and password are required to login to, account and password information is acquired and the window state of the application may also be acquired. For example, the user chats with user A on the terminal 1 originally, and the window state is acquired, so that if the user performs display transferring to a terminal 2, the chat window with user A is opened automatically based on the window state and even a chat history on the terminal 1 is displayed.

In step 820, the account, password and state are saved.

In step 824, content state is acquired.

In step 826, the content and the state are saved, such as a page position of a document or a webpage being scrolled currently.

In step 827, it is detected whether the sending is completed, including a sent document or file, web address, name of an application, for example.

In step 828, the flow ends if the sending is completed; or otherwise step 827 is returned to and the detection is continued.

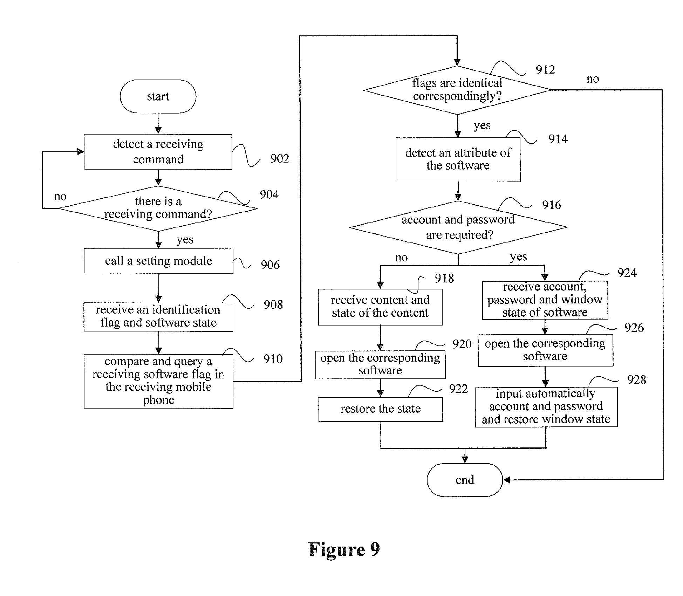

Figure 9 illustrates a flowchart of a receiving process of a terminal according to an embodiment of the disclosure.

As shown in Figure 9, the flow of the receiving process of the terminal according to the embodiment of the disclosure includes the following steps.

In step 902, a receiving command is detected.

In step 904, it is judged whether there is a receiving command. Step 906 is performed if there is a receiving command; or otherwise step 902 is returned to.

In step 906, a setting module is called to acquire setting information.

In step 908, an identification flag, a software state and the like are received.

In step 910, a receiving software flag stored in the receiving mobile phone is compared and queried. For example, the sender desires to perform display transferring of a webpage but the webpage is not allowed to be transferred according to the setting of the receiver, this can be viewed by comparison.

In step 912, it is judged whether the flags are identical, that is, whether the set flag of the receiver is conformed to. Step 914 is performed if the set flag of the receiver is conformed to; or otherwise the flow ends.

In step 914, an attribute of the software is detected.

In step 916, it is judged whether an account and a password are required based on the attribute of the software. For example, information such as the account and the password is required if the attribute of the software indicates that the software is QQ. Step 924 is performed if the account and password are required; or otherwise step 918 is performed.

In step 918, content and state of the content are received.

In step 920, the corresponding software is opened.

In step 922, the state is restored, such as the progress for viewing a document, the progress for playing a song.

In step 924, the account and password, the window state of the software and the like are received.

In step 926, the corresponding software is opened.

In step 928, the software is automatically logged in to by using the account and password, and the state of the window is restored.

The technical solutions of the disclosure are described in details above in conjunction with the drawings. In the related technology, if other terminal other than the current terminal is used, a document, a software or the like on the current terminal are required to be opened again and the process is cumbersome. Therefore, a system for display transferring of interface content, a method for display transferring of interface content and a terminal are provided according to the disclosure, with which the terminals may be automatically connected with each other and display transferring of the displayed content from one terminal to other terminal is performed, to achieve content transferring and sharing.

The forgoing descriptions are only preferred embodiments of the present disclosure and are not intended to limit the present disclosure. Various changes and modifications may be made to the disclosure by those skilled in the art. Any changes, equivalent substitutions, improvements and so on made within the spirit and principle of the present disclosure are all contained in the scope of protection of the present disclosure.

## Claims

1. A system for display transferring of interface content, comprising:
a connection establishment unit, configured to establish a wireless connection between two terminals on which the interface content is to be transferred;
an identification unit, configured to determine an original terminal and a target terminal from the two terminals;
a content acquisition unit, configured to acquire displayed content on a screen interface of the original terminal; and
a display transferring unit, configured to transfer the displayed content to a screen interface of the target terminal.

2. The system for display transferring of the interface content according to claim 1, further comprising:
a switch unit, configured to enable a function about the display transferring of the interface content of the two terminals in response to a received enabling command.

3. The system for display transferring of the interface content according to claim 1, wherein the displayed content comprises at least one or a combination of: an opened document, a running file, an opened webpage and a running application; and
the content acquisition unit is configured to send the document, the file, a web address of the webpage and/or information of the application in the original terminal to the target terminal;
the display transferring unit is configured to open the received document, file and/or web address on the target terminal, or running a corresponding application corresponding to the received information of the application on the target terminal.

4. The system for display transferring of the interface content according to claim 3, further comprising:
a detection unit, configured to judge whether a matched application matched with the received information of the application from the original terminal exists in the target terminal, wherein the matched application is run in a case that the matched application exists in the target terminal, and display transferring of the application is not performed in a case that the matched application does not exist in the target terminal.

5. The system for display transferring of the interface content according to claim 3 or 4, wherein the content acquisition unit further comprises:
a progress acquisition sub-unit, configured to acquire progress information of the displayed content from the original terminal and send the acquired progress information to the target terminal; and
the display transferring unit further comprises:
a progress adjustment sub-unit, configured to adjust the opened document, file, webpage and/or application in the target terminal based on the received progress information.

6. The system for display transferring of the interface content according to claim 3 or 4, wherein in a case that login information is required by the application, the content acquisition unit further comprises:
a login information acquisition sub-unit, configured to acquire the login information of the application from the original terminal and send the acquired login information to the target terminal; and
the display transferring unit further comprises:
an automatic login sub-unit, configured to automatically log in to the corresponding application on the target terminal based on the received login information.

7. The system for display transferring of the interface content according to claim 6, wherein the login information acquisition sub-unit comprises:
an information record sub-module, configured to record login information input by a user; or
an information request sub-module, configured to initiate a request to the application and receive the login information provided by the application.

8. A method for display transferring of interface content, comprising:
a step 302 of: establishing a wireless connection between two terminals on which the interface content is to be transferred, and determining an original terminal and a target terminal from the two terminals; and
a step 304 of: acquiring a displayed content on a screen interface of the original terminal, and transferring the displayed content to a screen interface of the target terminal.

9. The method for display transferring of the interface content according to claim 8, further comprising:
enabling a function about the display transferring of the interface content of the two terminals in response to a received enabling command before step 302.

10. The method for display transferring of the interface content according to claim 8, wherein the displayed content comprises at least one or a combination of: an opened document, a running file, an opened webpage and a running application; and
step 304 comprises:
sending, by the original terminal, the document, the file, a web address of the webpage and/or information of the application to the target terminal; and
opening, by the target terminal, the received document, file and/or web address, or running, by the target terminal, a corresponding application corresponding to the received information of the application.

11. The system for display transferring of the interface content according to claim 10, wherein step 304 further comprises:
judging whether a matched application matched with the received information of the application from the original terminal exists in the target terminal, wherein the matched application is run in a case that the matched application exists in the target terminal, and display transferring of the application is not performed in a case that the matched application does not exist in the target terminal.

12. The method for display transferring of the interface content according to claim 10 or 11, wherein step 304 further comprises:
sending, by the original terminal, progress information of the displayed content to the target terminal; and
adjusting, by the target terminal, the opened document, file, webpage and/or application based on the received progress information.

13. The method for display transferring of the interface content according to claim 10 or 11, wherein in a case that login information is required by the application, step 304 further comprises:
acquiring, by the original terminal, the login information of the application and sending, by the original terminal, the acquired login information to the target terminal; and
automatically logging in to the corresponding application by the target terminal based on the received login information.

14. The method for display transferring of the interface content according to claim 13, wherein acquiring, by the original terminal, the login information of the application comprises:
recording login information input by a user; or
initiating a request to the application and receiving the login information provided by the application.

15. A terminal comprising the system for display transferring of the interface content according to any one of claims 1 to 7.
